# EUROPÄISCHE PATENTSCHRIFT

(11) **EP 0 632 881 B1**
(45) Veröffentlichungstag und Bekanntmachung des Hinweises auf die Patenterteilung: **12.06.1996**
(21) Anmeldenummer: 93906429.1
(22) Anmeldetag: 15.03.1993
(51) Int. Cl.: G01B 7/16

(54) **VERFAHREN ZUR BESTIMMUNG EINER DEHNUNG EINES OBJEKTS MITTELS EINES DEHNUNGSMESSAUFNEHMERS, SEINE ANWENDUNG SOWIE DEHNUNGSMESSAUFNEHMER HIERFÜR**
METHOD OF DETERMINING EXTENSION IN ONE DIRECTION IN AN OBJECT BY MEANS OF AN EXTENSOMETER, THE APPLICATION THEREOF, AND SUITABLE EXTENSOMETERS
PROCEDE DE DETERMINATION DE L'EXTENSION D'UN OBJET AU MOYEN D'UN CAPTEUR EXTENSOMETRIQUE, APPLICATION DUDIT PROCEDE ET CAPTEUR DE MESURE D'ALLONGEMENT CORRESPONDANT.

(30) Priorität: 26.03.1992 DE 9204103 U
(43) Veröffentlichungstag der Anmeldung: 11.01.1995
(73) Patentinhaber: SIEMENS AKTIENGESELLSCHAFT, D-80333 München (DE)
(72) Erfinder: MENZER, Wolfgang, D-5204 Lohmar 21 (DE); FÖRSTER, Kunibert, D-5067 Kürten-Dürscheid (DE); BECHER, Josef, D-5063 Overath 1 (DE)
(86) Internationale Anmeldenummer: DE9300230
(87) Internationale Veröffentlichungsnummer: WO9319344

(56) Entgegenhaltungen:
- EP-A- 0 088 278
- DE-A- 3 921 237
- DE-U- 8 803 392

## Beschreibung

Die Erfindung betrifft ein Verfahren zur Bestimmung einer Dehnung eines Objekts mittels eines Dehnungsmeßaufnehmers mit zwei Schenkeln, welche mit jeweils einem Ende an ein Gelenk angeschlossen und in einer Spreizebene beweglich sind und welche mit dem jeweils anderen Ende mit dem Objekt verbunden werden, so daß die Dehnung die Schenkel auseinanderspreizt. Weiterhin betrifft die Erfindung die Anwendung des Verfahrens sowie einen Dehnungsmeßaufnehmer zur Durchführung des Verfahrens.

Dehnungsmesser der erwähnten Art haben zwei üblicherweise etwa gerade Schenkel, welche mit jeweils einem Ende an ein Gelenk angeschlossen und in einer Spreizebene beweglich sind und welche mit dem jeweils anderen Ende mit dem Objekt verbunden werden. Dabei ist die Spreizebene im wesentlichen senkrecht zu einer Oberfläche des Objekts zwischen den anderen Enden der Schenkel, also zwischen den Verbindungsstellen der Schenkel mit dem Objekt, ausgerichtet; der Dehnungsmeßaufnehmer "steht" also nach Art einer Stehleiter auf der Oberfläche.

Solche Dehnungsmeßaufnehmer und Verfahren zu ihrem Einsatz sind aus den Schriften EP 0 088 278 B1, DE 32 39 877 A1 und DE 34 10 840 A1 bekannt. Die Verfahren bzw. die Wirkungsweisen der Dehnungsmeßaufnehmer beruhen darauf, daß die beiden Schenkel der Dehnungsmeßaufnehmer mit ihren freien Enden an in Richtung der zu bestimmenden Dehnung voneinander entfernten Stellen des zu überwachenden Objekts befestigt sind und beim Eintritt der Dehnung gespreizt werden. An ihren anderen Enden sind die Schenkel über ein Gelenk miteinander verbunden. Durch die Spreizung der Schenkel wird beispielsweise der Abstand zwischen zwei Kondensatorplatten, deren jede an einem der Schenkel befestigt ist, und damit die Kapazität der mit den Kondensatorplatten gebildeten Kondensatoranordnung verändert, wobei die Änderung der Kapazität in einer festen Relation zur Spreizung der Schenkel und damit in einer festen Relation zur Dehnung steht.

Die bekannten Dehnungsmeßaufnehmer lassen nur die Erfassung von Dehnungen zu, die im Bereich einiger Zehntel Millimeter liegen, und setzen weiter voraus, daß die beiden Befestigungsstellen der Schenkel sich beim Eintritt der Dehnung im wesentlichen nur geradlinig voneinander entfernen. Ein Verdrehen der Schenkel gegeneinander, wie es oft bei der Belastung von bruchmechanischen Proben der üblichen Art auftritt, ist nicht möglich bzw. führt zu störenden Torsionsbelastungen des Dehnungsmeßaufnehmers. Wegen der Dicke üblicher Kondensatorplatten beträgt darüber hinaus der Mindestabstand der Schenkel mehrere Millimeter; dies kann ungünstig sein, wenn die Erfassung von Dehnungen zwischen zwei Punkten erfolgen soll, die zunächst eng benachbart liegen, z.B. auf den beiden Seiten eines Risses, dessen Aufweitungsgeschwindigkeit untersucht werden soll.

Aus der DE 88 03 392 U1 geht ein Wegaufnehmer hervor, mit zwei an einer Werkstoffprobe ansetzbaren Schenkeln, die an ihren freien Enden Abgriffelemente aufweisen, über die der Wegaufnehmer an der Werkstoffprobe fixiert wird. Über wenigstens einen am Wegaufnehmer befestigten Dehnungsstreifen wird eine einer Wegänderung proportionale Meßgröße geliefert. Die Schenkel des Wegaufnehmers bestehen aus federelastischem Stahl. Sie werden derart an der Werkstoffprobe befestigt, daß eine Spreizung in einer zur Oberfläche der Werkstoffprobe parallelen Spreizebene erfolgt.

Aus der EP 0 088 278 B1 geht ein Dehnungsmeßaufnehmer hervor, der zwei Schenkel aufweist, welche mit jeweils einem Ende an ein Gelenk angeschlossen und an dem jeweils anderen Ende mit einem zu untersuchenden Objekt zu verbinden sind. Dabei stehen die Schenkel auf dem Objekt, das heißt, daß eine durch die Spreizung der Schenkel definierte Spreizebene senkrecht zur Oberfläche des Objektes steht. Zur Befestigung an dem Objekt hat jeder Schenkel Haltestreifen, die auf das Objekt aufgelegt werden.

Aufgabe der vorliegenden Erfindung ist die Schaffung eines Verfahrens zur Bestimmung einer Dehnung eines Objekts mittels eines Dehnungsmeßaufnehmers dahingehend, daß Dehnungen gemessen werden können, die zwischen zwei-zueinander eng benachbarten Punkten auftreten und mehrere Millimeter abweichen können. Auch soll die Bestimmung einer Dehnung eines Objekts auch dann noch möglich sein, wenn das Objekt, beispielsweise im Rahmen von Zeitstandsversuchen, auf hohe Temperaturen, beispielsweise bis 700°C, erhitzt wird.

Schließlich soll die Bestimmung einer Dehnung auch dann noch möglich sein, wenn die Befestigungsstellen der Schenkel des Dehnungsmeßaufnehmers sich nicht nur geradlinig voneinander entfernen, sondern sich zusätzlich gegeneinander verdrehen.

Zur Lösung dieser Aufgabe wird ein Verfahren zur Bestimmung einer Dehnung eines Objekts mittels eines Dehnungsmeßaufnehmers angegeben, wobei der Dehnungsmeßaufnehmer zwei Schenkel hat, welche mit jeweils einem Ende an ein Gelenk angeschlossen und in einer Spreizebene beweglich sind und welche mit dem jeweils anderen Ende mit dem Objekt verbunden werden, so daß die Dehnung die Schenkel auseinanderspreizt, wobei die Spreizebene etwa parallel zu einer Oberfläche des Objekts zwischen den anderen Enden der Schenkel ausgerichtet wird, und wobei jeder Schenkel eine in der Spreizebene ausgerichtete Fußlasche tragt, die einen über das andere Ende des Schenkels hinausragenden Bereich hat und an diesem Bereich an dem Objekt befestigt wird.

Erfindungsgemäß wird ein Dehnungsmesser zur Bestimmung einer Dehnung eines Objekts nicht nach Art einer Stehleiter auf das Objekt aufgestellt, so daß die Spreizebene etwa senkrecht zu der Oberfläche des Objekts zwischen den an dem Objekt befestigten Enden der Schenkel ausgerichtet wird, sondern der Dehnungsmeßaufnehmer wird derart auf das Objekt aufgelegt, daß die Spreizebene etwa parallel zu der Oberfläche des Objekts zwischen den anderen Enden der Schenkel ausgerichtet ist. Diese Anordnung des Dehnungsmeßaufnehmers hat insbesondere den Vorteil, daß zusätzlich zur Bewegung der Verbindungsstellen gegeneinander in Richtung der Dehnung auch Bewegungen senkrecht zur Richtung der Dehnung möglich sind; solche Bewegungen führen nicht mehr-zu einer Torsion des Dehnungsmeßaufnehmers wie bekannt aus dem Stand der Technik, sondern lediglich zu geringfügigen Drehungen des Dehnungsmeßaufnehmers ohne Torsion. Die Bestimmung der Dehnung wird durch solche Drehungen kaum beeinflußt, jedenfalls dann nicht, wenn diese Drehungen auf ein gewisses Maß beschränkt bleiben. Das Verfahren ist daher anwendbar in vielen Fällen, wo die Verfahren des Standes der Technik aufgrund der Torsion des Dehnungsmeßaufnehmers nicht mehr eingesetzt werden konnten. Darüber hinaus können zur Ausübung des Verfahrens die Schenkel des Dehnungsmeßaufnehmers fast beliebig verlängert werden, wodurch die Abhängigkeit der Spreizung der Schenkel von der zu bestimmenden Dehnung in weiten Grenzen variiert werden kann; insbesondere kann für alle Arten von zwischen die Schenkel eingefügten Meßeinrichtungen, insbesondere für eine kapazitive Meßeinrichtung, über die Variation der Abhängigkeit der Spreizung von der Dehnung die AbhängigReit der von einer Meßeinrichtung erhaltenen Meßsignale von der Dehnung wesentlich besser als bisher den Anforderungen des jeweiligen Einzelfalls angepaßt werden. Insbesondere kann für eine Meßeinrichtung in Form einer Kondensatoranordnung durch Variation der Länge der Schenkel erzielt werden, daß die als Maß für die Dehnung gemessene Kapazität der Kondensatoranordnung weitgehend linear von der zu bestimmenden Dehnung abhängt. Darüber hinaus besteht die Möglichkeit, den Abstand der Verbindungsstellen der Schenkel mit dem Objekt in weiten Grenzen zu variieren und insbesondere sehr klein zu machen, so daß eine Bestimmung einer Dehnung an einer bruchmechanischen Probe leicht möglich ist, wobei übrigens standardmäßig ein Abstand von etwa 5 mm zwischen den Verbindungsstellen einzuhalten wäre. Das Verfahren eignet sich auch besonders zur Anwendung an Objekten, die auf hohe Temperaturen erhitzt werden, da der Dehnungsmeßaufnehmer dem Objekt unmittelbar benachbart ist und demgemäß nicht durch Temperaturgradienten mit dem daraus resultierenden mechanischen Spannungen beeinträchtigt werden kann.

Die Verbindungsstellen zwischen den Schenkeln und dem Objekt sind günstigerweise im wesentlichen punktförmig und werden vorzugsweise durch Schweißen, speziell Punktschweißen, gebildet. Solche Verbindungsstellen ermöglichen in einfacher Weise eine gewisse Drehung des Dehnungsmeßaufnehmers in der Spreizebene, um beispielsweise Verschiebungen der Verbindungsstellen senkrecht zur Richtung der Dehnung auszugleichen. Die erwünschte Bestimmung der Dehnung kann dadurch besonders genau erfolgen. Überraschenderweise hat sich gezeigt, daß Punktschweißungen hervorragend geeignet sind zur Aufnahme der Kräfte und Momente, die an den Verbindungsstellen zwischen den Schenkeln und dem Objekt auftreten und insbesondere die zum Ausgleich von Bewegungen senkrecht zur Dehnungsrichtung erforderlichen kleinen Drehungen zulassen.

Besonders günstig ist es, die Dehnung des Objekts in der Weise zu bestimmen, daß eine von der Spreizung der Schenkel abhängige Kapazität einer an den Schenkeln befestigten Kondensatoranordnung gemessen wird. Wie bereits erwähnt, erlaubt die konstruktive Freiheit des Verfahrens in mehrfacher Weise die Anpassung des Dehnungsmeßaufnehmers an die Erfordernisse einer Kondensatoranordnung und erlaubt es insbesondere, einen weitgehend linearen Zusammenhang zwischen der Kapazität der Kondensatoranordnung und der Dehnung zu realisieren.

Das Verfahren ist besonders geeignet zur Überwachung eines Risses in dem Objekt, wobei der Riß mit dem Dehnungsmeßaufnehmer überbrückt und die durch Wachstum des Risses bedingte Dehnung bestimmt wird. Dies ergibt sich insbesondere daraus, daß das Verfahren weitgehend unabhängig von Relativbewegungen der Verbindungsstellen senkrecht zur Richtung der Dehnung, konkret also zur Richtung des Wachstums des Risses, ist. Aus diesen Gründen ist das Verfahren auch besonders geeignet zur Anwendung an bruchmechanischen Proben, insbesondere zur Bestimmung des Wachstums eines Risses an einer solchen bruchmechanischen Probe.

Im Hinblick auf einen Dehnungsmeßaufnehmer ist die erfindungsgemaße Lösung der Aufgabe gegeben durch einen Dehnungsmeßaufnehmer zur Bestimmung einer Dehnung eines Objekts, mit zwei Schenkeln, welche mit jeweils einem Ende an einem Gelenk angeschlossen und in einer Spreizebene beweglich sind und welche an dem jeweils anderen Ende mit dem Objekt zu verbinden sind, so daß die Dehnung die Schenkel auseinanderspreizt, bei dem jeder Schenkel eine in der Spreizebene ausgerichtete Fußlasche tragt, die einen über das andere Ende des Schenkels hinausragenden Bereich hat und an diesem Bereich an dem Objekt zu befestigen ist.

An solchen Fußlaschen kann der Dehnungsmeßaufnehmer auf das zu untersuchende Objekt aufgelegt und an diesem Objekt befestigt werden. Jede Fußlasche bildet günstigerweise eine Auflage für den Schenkel, zu dem sie gehört, ragt aber günstigerweise nicht zu dem anderen Schenkel hin unter dem Schenkel, an dem sie befestigt ist, hervor. Vorzugsweise ist die zu dem jeweils anderen Schenkel gerichtete Innenkante jeder Fußlasche derart angeordnet, daß sie auf eine Längskante des Schenkels stößt, an dem sie befestigt ist. Jede Fußlasche ragt über das Ende des Schenkels, an dem sie befestigt ist, hinaus, wodurch eine einfache Möglichkeit zur Bildung der festen Verbindung zwischen dem Schenkel und dem Objekt gegeben ist.

Günstig ist es auch, wenn die Schenkel im unbelasteten Zustand zumindest annähernd parallel zueinander ausgerichtet sind; dies erleichtert insbesondere die Einjustierung von Meßeinrichtungen, die zur Messung der-Dehnung zwischen den Schenkeln angeordnet sind.

Das Gelenk zwischen den Schenkeln des Dehnungsmeßaufnehmers ist günstigerweise eine biegsame Lasche, wodurch sich eine besonders hohe Beweglichkeit der Schenkel bei geringen Federkräften zwischen den Schenkeln bei einer Spreizung ergibt.

Zur Messung der Spreizung bzw. Dehnung ist an den Schenkeln mit besonderem Vorteil eine Kondensatoranordnung befestigt, welche eine von der Spreizung der Schenkel abhängige Kapazität hat. Die Vorteile einer Kondensatoranordnung sind bereits eingehend erläutert worden. Vorzugsweise ist an jedem Schenkel eine zu der Kondensatoranordnung gehörige Kondensatorplatte befestigt, und die Kondensatorplatten sind mit besonderem Vorteil etwa parallel zueinander ausgerichtet. Derart wird die Kapazität der Kondensatoranordnung unmittelbar durch den Abstand zwischen den Kondensatorplatten bestimmt, woraus sich eine einfache Abhängigkeit zwischen der Spreizung und der Kapazität ergibt.

Ein Ausführungsbeispiel der Erfindung ist in der Zeichnung dargestellt. In der Zeichnung zeigen:
- Fig. 1: einen Dehnungsmeßaufnehmer an einem zu überwachenden Riß;
- Fig. 2: einen Querschnitt durch den Dehnungsmeßaufnehmer entsprechend der Linie II-II der Fig. 3; und
- Fig. 3: eine Seitenansicht des Dehnungsmeßaufnehmers entsprechend der Linie III-III der Fig. 2.

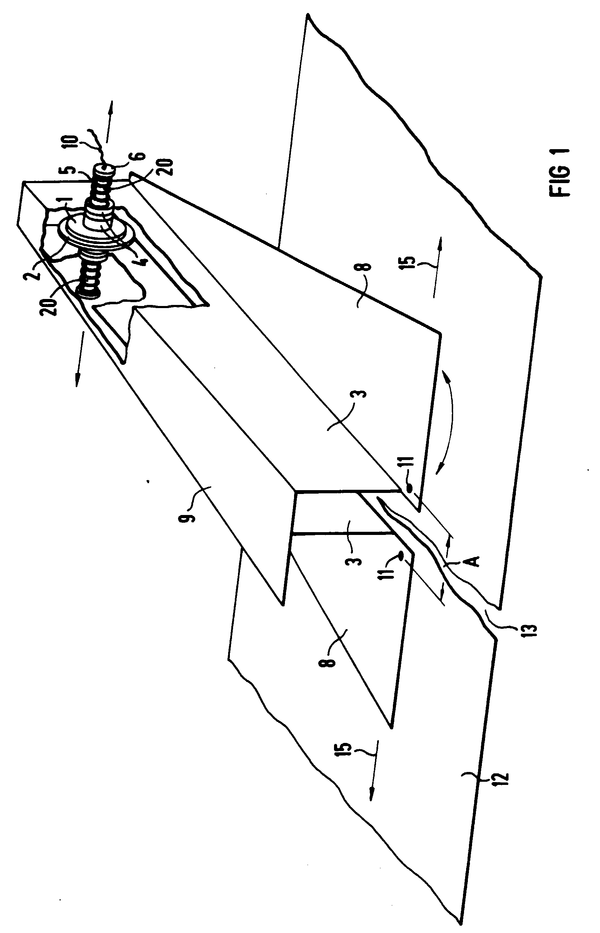

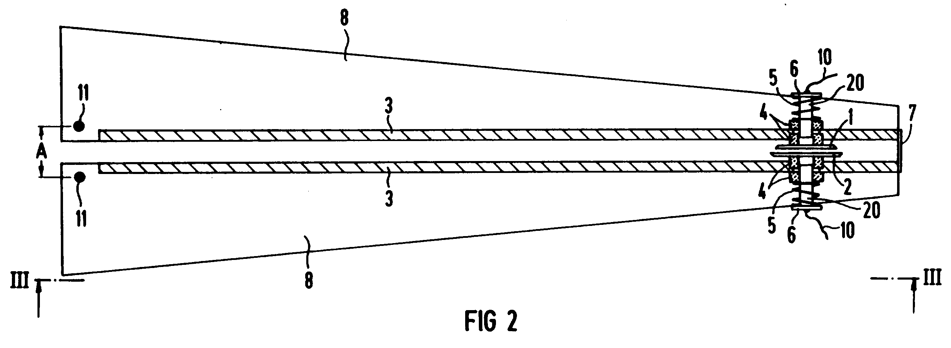

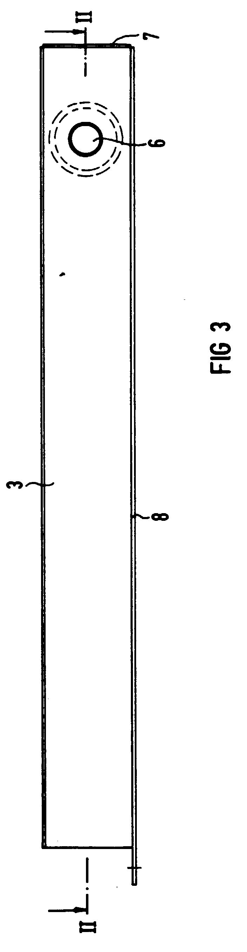

Der Dehnungsmeßaufnehmer nach den Figuren 1 bis 3 besteht aus zwei im unbelasteten Zustand zumindest annähernd parallel zueinander ausgerichteten Schenkeln 3-, zwischen denen, jeweils am hinteren Ende eines Schenkels 3, zwei runde Kondensatorplatten 1, 2 angeordnet sind. Diese Kondensatorplatten 1, 2 sind endseitig auf metallischen Achsen 20 befestigt und im Durchmesser unterschiedlich gehalten, um Meßfehler in Folge von Parallelverschiebungen gegeneinander zu verhindern. Die Kondensatorplatten 1, 2 sind durch Isolationsstücke, speziell durch untergelegte Keramikringe 4, von den Schenkeln 3 isoliert. Auch an den Kondensatorplatten 1, 2 abgewandten Seiten der Schenkel 3 befinden sich solche Ringe 4. Die Kondensatorplatten 1, 2 werden durch Schraubenfedern 5, die sich auf Federplatten 6 abstützen, fixiert. Die Schenkel 3 sind an ihren hinteren Enden durch eine biegsame Lasche 7, welche die Funktion eines Gelenks erfüllt, miteinander verbunden. Sie sind weiter mit je einer im rechten Winkel zu ihnen angeordneten Fußlasche 8 versehen. Die Fußlaschen 8 sind trapezförmig ausgebildet. Sie verjüngen sich nach hinten. Die Innenkanten der Fußlaschen 8 stoßen dabei auf die unteren Längskanten der Schenkel 3. Jede Fußlasche 8 ist dabei an dem zugehörigen Schenkel 3 befestigt. Alternativ können die Schenkel 3 und die zugehörigen Fußlaschen 8 auch jeweils aus einem einzigen entsprechenden Winkelstück bestehen, bevorzugt aus Metall. Die Fußlaschen 8 gehen über die vorderen Enden der Schenkel 3 hinaus. Nur an einem der Schenkel 3 ist oben ein Führungsblech 9 rechtwinklig befestigt, um ein Verkanten der Schenkel 3 gegeneinander zu verhindern; das Führungsblech 9 kann auch Abschirmfunktionen für die aus den Kondensatorplatten 1, 2 gebildete Kondensatoranordnung haben. Über Anschlüsse oder Drähte 10 sind die Achsen 20 und damit die Kondensatorplatten 1, 2 mit einem hier nicht gezeigten Meß- und Anzeigegerät verbunden, mittels dem die Kapazität der Kondensatoranordnung 1, 2 gemessen werden kann, was einen Hinweis auf den Abstand der Kondensatorplatten 1, 2 voneinander und damit über den Grad der Spreizung der Schenkel 3 ergibt.

Mittels je eines Schweißpunktes 11 sind die vorderen Enden der Fußlaschen 8 an dem Objekt 12, z.B. an einem Rohr, befestigt, dessen Dehnung in Richtung der gezeigten Pfeile 15 gemessen oder überwacht werden soll. Diese Dehnung kann relativ groß sein. Sie kann mehrere Millimeter betragen, was von besonderer Bedeutung ist, wenn, wie dargestellt, im Objekt 12 sich ein Riß 13 gebildet hat, der sich unter einer Last (nicht gezeigt) weiter aufweitet und dabei von dem Dehnungsmeßaufnehmer überwacht werden soll. Die Schweißpunkte 11 sind so gelegt, daß sich der Riß 13 zwischen den vorderen Enden der Fußlaschen 8 befindet. Auf jeder Seite des Risses 13 ist jeweils ein Schenkel 3 befestigt. Die Konstruktion gestattet es, mit den Schweißpunkten 11 sehr nahe an den Riß 13 heranzugehen. Der Abstand A zwischen den beiden Schweißpunkten 11 braucht nur wenige Millimeter, z.B. etwa 5 mm, zu betragen. Aufgrund der Länge der Schenkel 3 wird bereits eine geringe Verbreiterung des Risses 13 zuverlässig angezeigt. Bei einer solchen Verbreiterung des Risses 13 entfernen sich die vorderen Enden der Schenkel 3 voneinander. Es ergibt sich eine Spreizung der Schenkel 3, wobei die hinteren Enden der Schenkel 3 durch die Lasche 7 festgehalten werden. Die Spreizung der Schenkel 3 erfolgt in einer Spreizebene, welche etwa parallel zur Oberfläche des Objekts 12 zwischen den Schweißpunkten 11 ausgerichtet ist. Der Dehnungsmeßaufnehmer liegt also auf der Oberfläche des Objektes 12 auf.

Aus Fig. 1 ist ersichtlich, daß die Schenkel 3 und Fußlaschen 8 relativ lang sein können. Die Kondensatorplatten 1, 2 können grundsätzlich an jeder beliebigen Position zwischen den Schenkeln 3 angeordnet werden, wobei die Auswahl der Position nach verschiedenen Kriterien erfolgen kann. Der Dehnungsmeßaufnehmer ist insbesondere für hohe Temperaturen geeignet, wie sie z.B. bei Rohrleitungen für heiße Fluide in Kraftwerken auftreten. Mit geeigneten Werkstoffen ist ein Einsatz bis zu 700°C ohne weiteres möglich.

## Patentansprüche

1. Verfahren zur Bestimmung einer Dehnung eines Objekts (12) mittels eines Dehnungsmeßaufnehmers mit zwei Schenkeln (3), welche mit jeweils einem Ende an ein Gelenk (7) angeschlossen und in einer Spreizebene beweglich sind und welche mit dem jeweils anderen Ende mit dem Objekt (12) verbunden werden, so daß die Dehnung die Schenkel (3) auseinanderspreizt, wobei die Spreizebene etwa parallel zu einer Oberfläche des Objekts (12) zwischen den anderen Enden der Schenkel (3) ausgerichtet wird, wobei jeder Schenkel (3) eine in der Spreizebene ausgerichtete Fußlasche (8) tragt, die einen über das andere Ende des Schenkels (3) hinausragenden Bereich hat und an diesem Bereich an dem Objekt (12) befestigt wird.

2. Verfahren nach Anspruch 1, bei dem jeder Schenkel (3) an einer im wesentlichen punktförmigen Verbindungsstelle (11) mit dem Objekt (12) verbunden, vorzugsweise verschweißt, wird.

3. Verfahren nach Anspruch 1 oder 2, bei dem jeder Schenkel (3) durch Punktschweißen mit dem Objekt (12) verbunden wird.

4. Verfahren nach einem der vorhergehenden Ansprüche, bei dem eine von der Spreizung der Schenkel (3) abhängige Kapazität einer an den Schenkeln (3) befestigten Kondensatoranordnung (1, 2) zur Bestimmung der Dehnung gemessen wird.

5. Anwendung des Verfahrens nach einem der Ansprüche 1 bis 4 zur Überwachung eines Risses (13) in dem Objekt (12), wobei der Riß (13) mit dem Dehnungsmeßaufnehmer überbrückt und die durch Wachstum des Risses (13) bedingte Dehnung bestimmt wird.

6. Anwendung nach Anspruch 5 oder Anwendung des Verfahrens nach einem der Ansprüche 1 bis 4, wobei das Objekt (12) eine bruchmechanische Probe ist.

7. Dehnungsmeßaufnehmer zur Bestimmung einer Dehnung eines Objekts (12), mit zwei Schenkeln (3), welche mit jeweils einem Ende an einem Gelenk (7) angeschlossen und in einer Spreizebene beweglich sind und welche an dem jeweils anderen Ende mit dem Objekt (12) zu verbinden sind, so daß die Dehnung die Schenkel (3) auseinanderspreizt,
**dadurch gekennzeichnet,** daß jeder Schenkel (3) eine in der Spreizebene ausgerichtete Fußlasche (8) tragt, die einen über das andere Ende des Schenkels (3) hinausragenden Bereich hat und an diesem Bereich an dem Objekt (12) zu befestigen ist.

8. Dehnungsmeßaufnehmer nach Anspruch 7, bei dem die zu dem jeweils anderen Schenkel (3) gerichtete Innenkante jeder Fußlasche (8) auf eine Längskante des Schenkels (3) stößt, an dem sie befestigt ist.

9. Dehnungsmeßaufnehmer nach Ansprüch 7 oder 8, bei dem die Schenkel (3) im unbelasteten Zustand zumindest annähernd parallel zueinander ausgerichtet sind.

10. Dehnungsmeßaufnehmer nach einem der Ansprüche 7 bis 9, bei dem das Gelenk (7) eine biegsame Lasche (7) ist.

11. Dehnungsmeßaufnehmer nach einem der Ansprüche 7 bis 10, bei dem an den Schenkeln (3) eine Kondensatoranordnung (1, 2) befestigt ist, die eine von der Spreizung der Schenkel (3) abhängige Kapazität hat.

12. Dehnungsmeßaufnehmer nach Anspruch 11, bei dem an jedem Schenkel (3) eine zu der Kondensatoranordnung (1, 2) gehörige Kondensatorplatte (1, 2) befestigt ist.

13. Dehnungsmeßaufnehmer nach Anspruch 12, bei dem die Kondensatorplatten (1, 2) etwa parallel zueinander ausgerichtet sind.

## Claims

1. Method for determining an extension of an object (12) by means of an extensometer having two legs (3) which are each connected at one end to a joint (7) and are movable in a spreading plane and which are each connected at the other end to the object (12), so that the extension spreads the legs (3) apart, the spreading plane being oriented approximately parallel to a surface of the object (12) between the other ends of the legs (3), each leg (3) carrying a foot bracket (8) which is oriented in the spreading plane and which has a region projecting beyond the other end of the leg (3) and is fastened to the object (12) at this region.

2. Method according to Claim 1, wherein each leg (3) is connected, preferably welded, to the object (12) at an essentially spot-shaped connection point (11).

3. Method according to Claim 1 or 2, wherein each leg (3) is connected to the object (12) by spot welding.

4. Method according to one of the preceding claims, wherein a capacitance, dependent on the spreading of the legs (3), of a capacitor arrangement (1, 2) fastened to the legs (3) is measured in order to determine the extension.

5. Use of the method according to one of Claims 1 to 4 for monitoring a crack (13) in the object (12), the crack (13) being bridged by the extensometer, and the extension caused by the growth of the crack (13) being determined.

6. Use according to Claim 5 or use of the method according to one of Claims 1 to 4, the object (12) being a fracture sample.

7. Extensometer for determining an extension of an object (12), having two legs (3) which are each connected at one end to a joint (7) and are movable in a spreading plane and which are each to be connected at the other end to the object (12), so that the extension spreads the legs (3) apart, characterized in that each leg (3) carries a foot bracket (8) which is oriented in the spreading plane and which has a region projecting beyond the other end of the leg (3) and is to be fastened to the object (12) at this region.

8. Extensometer according to Claim 7, wherein the inner edge of each foot bracket (8) directed towards the respective other leg (3) butts onto a longitudinal edge of the leg (3) to which it is fastened.

9. Extensometer according to Claim 7 or 8, wherein, in the non-loaded state, the legs (3) are oriented at least approximately parallel to one another.

10. Extensometer according to one of Claims 7 to 9, wherein the joint (7) is a flexible link (7).

11. Extensometer according to one of Claims 7 to 10, wherein a capacitor arrangement (1, 2) having a capacitance dependent on the spreading of the legs (3) is fastened to the legs (3).

12. Extensometer according to Claim 11, wherein a capacitor plate (1, 2) belonging to the capacitor arrangement (1, 2) is fastened to each leg (3).

13. Extensometer according to Claim 12, wherein the capacitor plates (1, 2) are oriented approximately parallel to one another.

## Revendications

1. Procédé de détermination d'une dilatation d'un objet (12) au moyen d'un capteur extensométrique comportant deux branches (3), que l'on connecte chacune par une extrémité à une articulation (7), que l'on peut faire se déplacer dans un plan d'écartement et que l'on relie chacune par l'autre extrémité à l'objet (12) de sorte que la dilatation écarte l'une de l'autre les branches (3), le plan d'écartement s'étendant à peu près parallèlement à une surface de l'objet (12) entre les autres extrémités des branches (3), chaque branche (3) portant un pied (8), qui est dans le plan d'écartement, qui a une zone dépassant de l'autre extrémité de la branche (3) et que l'on fixe dans cette zone à l'objet (12).

2. Procédé suivant la revendication (1), dans lequel on relie et de préférence on soude chaque branche (3) à l'objet (12) en un emplacement (11) de liaison sensiblement ponctuel.

3. Procédé suivant la revendication 1 ou 2, dans lequel on relie chaque branche (3) à l'objet (12) par soudage par points.

4. Procédé suivant l'une des revendications précédentes, dans lequel, pour déterminer la dilatation, on mesure une capacité, dépendant de l'écartement des branches (3), d'un dispositif (1, 2) de condensateur fixé aux branches (3).

5. Utilisation du procédé suivant l'une des revendications 1 à 4 pour contrôler une fissure (13) dans l'objet (12), dans laquelle on met le capteur extensomètrique au-dessus de la fissure (13) et on détermine la dilatation due à la croissance de la fissure (13).

6. Utilisation suivant la revendication 5 ou utilisation du procédé suivant l'une des revendications 1 à 4, dans laquelle l'objet (12) est un échantillon pour un essai mécanique de rupture.

7. Capteur extensométrique destiné à la détermination d'une dilatation d'un objet (12), comportant deux branches (3), qui sont connectées chacune par une extrémité à une articulation (7), qui sont mobiles dans un plan d'écartement et qui peuvent être reliées chacune par l'autre extrémité à l'objet (12), de sorte que la dilatation écarte les branches (3) l'une de l'autre,
caractérisé en ce que chaque branche (3) porte un pied (8), qui est dans le plan d'écartement, qui a une zone dépassant de l'autre extrémité de la branche (3) et qui peut être fixé dans cette zone à l'objet (12).

8. Capteur extensométrique suivant la revendication 7, dans lequel l'arête intérieure dirigée vers l'autre branche (3) respective, de chaque pied (8) rencontre une arête longitudinale de la branche (3), à laquelle il est fixé.

9. Capteur extensométrique suivant la revendication 7 ou 8, dans lequel les branches (3) sont dirigées au moins approximativement parallèlement l'une à l'autre à l'état non chargé.

10. Capteur extensométrique suivant l'une des revendications 7 à 9, dans lequel l'articulation (7) est une patte (7) souple.

11. Capteur extensométrique suivant l'une des revendications 7 à 10, dans lequel un dispositif (1, 2) de condensateur, qui a une capacité dépendant de l'écartement de branche (3), est fixé aux branches (3).

12. Capteur extensométrique suivant la revendication 11, dans lequel une plaque (1, 2) de condensateur appartenant au dispositif (1, 2) de condensateur est fixée à chaque branche (3).

13. Capteur extensométrique suivant la revendication 12, dans lequel les plaques (1, 2) de condensateur sont dirigées à peu près parallèlement l'une à l'autre.
